# FASCICULE DE BREVET EUROPEEN

(11) **EP 3 077 853 B1**
(45) Date de publication et mention de la délivrance du brevet: **07.02.2018**
(21) Numéro de dépôt: 14806301.9
(22) Date de dépôt: 04.12.2014
(51) Int. Cl.: G01V 1/00, G08B 21/10

(54) **SYSTÈME ET PROCÉDÉ POUR MESURER LA LARGEUR D'UNE FAILLE D'UN SITE À SURVEILLER**
SYSTEM UND VERFAHREN ZUR MESSUNG DES AUSMASSES EINES DEFEKTS AUF EINER ZU ÜBERWACHENDEN STELLE
SYSTEM AND METHOD FOR MEASURING THE WIDTH OF A FAULT ON A SITE TO BE MONITORED

(30) Priorité: 04.12.2013 FR 1362120
(43) Date de publication de la demande: 12.10.2016
(73) Titulaire: Office National d'Etudes et de Recherches Aérospatiales (ONERA), 91120 Palaiseau (FR)
(72) Inventeur: LEMAITRE, François, 31650 Saint Orens De Gameville (FR)
(74) Mandataire: Regimbeau
(86) Numéro de dépôt international: PCT/EP2014/076525
(87) Numéro de publication internationale: WO 2015/082591

(56) Documents cités:
- US-A- 4 284 350
- US-A- 5 112 130
- US-A- 5 289 434
- US-A1- 2009 180 099

## Description

### DOMAINE TECHNIQUE GENERAL

L'invention concerne le domaine de la sismologie et de la volcanologie et notamment la surveillance des sites concernés dits « sites instables » et plus particulièrement la surveillance d'une faille d'un tel site.

### ETAT DE LA TECHNIQUE

Un site dit « instable » est une zone terrestre qui fait l'objet de modifications dans le temps, que cette zone soit naturelle ou non, que ces modifications correspondent à des mouvements de grande échelle (fissuration d'un sol par exemple) ou qu'elles soient localisées dans le temps ou en certaines parties de la zone (chutes de blocs rocheux par exemple).

Pour surveiller un site instable, on utilise, classiquement des détecteurs de rupture à fibres optiques ou encore des appareils de type distance-mètres à fils (extensomètres, fissuromètres, inclinomètres, etc.).

Toutefois, ces techniques de surveillance sont peu satisfaisantes, puisqu'elles nécessitent d'équiper l'ensemble des points surveillés sur le site de dispositifs actifs.

On peut également utiliser des systèmes de radiolocalisation GPS en configuration différentielle.

Là encore il s'agit de dispositifs actifs qui nécessitent une source d'énergie locale.

Pour pallier ces inconvénients, il a été proposé dans le document EP 0 811 854 un procédé et un dispositif utilisant des ondes radars associés à un ensemble réfléchissant disposé sur le site instable à surveiller et notamment pour surveiller l'écartement d'une faille (ou bien le mouvement d'un terrain ou d'un ouvrage d'art). Un tel ensemble comprend trois éléments réfléchissants à poser de part et d'autre de la faille à surveiller dont un miroir plan qui doit être orienté de manière précise pour réfléchir correctement les ondes issus des autres éléments réfléchissants.

Cette technique présente toutefois des inconvénients. Elle ne permet que la mesure transverse du mouvement de la faille et nécessite de disposer précisément les éléments réfléchissants de part et d'autre de la faille pour éviter les erreurs d'orientation. Le document US2009/0180099 divulgue un système de mesure utilisant plusieurs éléments réfléchissants.Les documents US5112130, US5289434 et US4284350 font également partie de l'état de la technique antérieure.

### PRESENTATION DE L'INVENTION

L'invention propose de pallier les inconvénients précités et propose à cet effet, selon un premier aspect, un ensemble réfléchissant destiné à être disposé sur un site surveillé, ledit site étant surveillé à partir d'un point d'observation à partir duquel une onde électromagnétique est dirigée vers ledit ensemble réfléchissant ; l'ensemble réfléchissant comprenant :
une première unité comprenant un réflecteur triédrique et un déflecteur diédrique, ledit réflecteur triédrique comprenant un sommet ;
une seconde unité comprenant un premier réflecteur triédrique comprenant un sommet ;
les première et seconde unités étant disposées l'une par rapport à l'autre pour que le réflecteur triédrique de la première unité réfléchisse vers le point d'observation une onde électromagnétique reçue dudit point d'observation et pour que le déflecteur diédrique défléchisse vers ledit point d'observation une onde électromagnétique issue dudit point d'observation et reçue du premier réflecteur triédrique de la seconde unité après avoir été défléchie vers ledit premier réflecteur triédrique de la seconde unité par ledit déflecteur diédrique.

L'ensemble réfléchissant peut comprendre un second réflecteur triédrique comprenant un sommet ; la seconde unité étant adaptée pour que le second réflecteur triédrique réfléchisse une onde électromagnétique incidente reçue d'un point d'observation, directement selon sa direction d'incidence.

Selon un second aspect l'invention propose un procédé de surveillance d'un site au moyen d'un ensemble réfléchissant selon le premier aspect de l'invention, le procédé comprenant les étapes suivantes :
- émission au moyen d'une unité d'émission/réception d'ondes électromagnétiques disposée en un point d'observation à partir duquel le site est surveillé, d' une onde électromagnétique vers l'ensemble réfléchissant;
- acquisition, par l'unité d'émission/réception, des ondes électromagnétiques réfléchies par les première et seconde unités ;
- traitement desdites ondes acquises pour en déduire des longueurs d'un premier chemin optique et d'un second chemin optique ;
- détermination à partir des longueurs des chemins optiques ainsi obtenus d'une distance entre le sommet du réflecteur de la première unité et le sommet du premier réflecteur de la seconde unité, ladite distance étant caractéristique du site à surveiller.

Le procédé selon le second aspect de l'invention est avantageusement complété par les caractéristiques suivantes, prises seules ou en une quelconque de leur combinaison techniquement possible :
- on détermine à partir des longueurs des chemins optiques une distance entre un point d'observation et le sommet du réflecteur de la première unité ;
- la seconde unité comprenant un second réflecteur triédrique comprenant un sommet, on traite les ondes acquises pour en déduire la longueur d'un troisième chemin optique pour déterminer une distance entre un point d'observation et le sommet du second réflecteur de la seconde unité ;
- on acquiert à plusieurs instants, par l'unité d'émission/réception, les ondes électromagnétiques réfléchies par les première et seconde unités, afin d'estimer une variation d'au moins une des distances estimées en et d'en déduire un éventuel mouvement du site surveillé;
- l'unité d'émission/réception d'ondes électromagnétiques est un radar monostatique et dans lequel pour en déduire au moins une longueur d'un premier chemin optique et une longueur d'un second chemin optique, on classe dans leur ordre d'arrivée les échos radars reçus correspondant aux dimensions du site surveillé, dans une direction d'observation du site surveillé et dans une bande de fréquence d'observation du site surveillé.

Selon un troisième aspect, l'invention concerne un système de surveillance d'un site comprenant un ensemble réfléchissant selon le premier aspect de l'invention ; une unité d'émission/réception d'ondes électromagnétiques ; et une unité de traitement configurée pour mettre en oeuvre un procédé selon le second aspect de l'invention.

Selon un quatrième aspect, l'invention concerne un produit programme d'ordinateur comprenant des instructions de code pour la mise en oeuvre d'un procédé selon le second aspect de l'invention lorsque celui-ci est exécuté par un processeur.

Les avantages de l'invention sont multiples.

Il est possible d'obtenir des mesures simultanées dans les deux directions radiale et normale de la faille à partir du point d'observation.

En outre, l'installation des différents éléments sur le site à surveiller est aisée, les éléments étant compacts, peu nombreux et tolérants aux erreurs d'orientation.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 illustre une surveillance d'un site selon l'invention;
- La figure 2 illustre des étapes d'un procédé de surveillance d'un site selon le premier ou le second mode de réalisation.

Sur l'ensemble des figures, les éléments similaires portent des références identiques.

### DESCRIPTION DETAILLEE DE L'INVENTION

On précise ici que l'on entend par « réflecteur triédrique » un réflecteur comportant trois surfaces planes, de formes pouvant être autres que triangulaires, réfléchissantes d'ondes électromagnétiques, orthogonales deux à deux et réunies en un point nommé sommet.

Ce type de réflecteur triédrique a comme effet technique bien connu de réfléchir un rayon lumineux incident vers sa direction d'arrivée, et ceci quel que soit l'angle d'incidence de ce rayon lumineux, ce qui les rend robustes aux incertitudes d'orientation. Dans le domaine visible, un tel réflecteur est nommé catadioptre. Par extension, le terme réflecteur triédrique couvre également les catadioptres ainsi que les lentilles de Luneberg dont l'effet technique est le même.

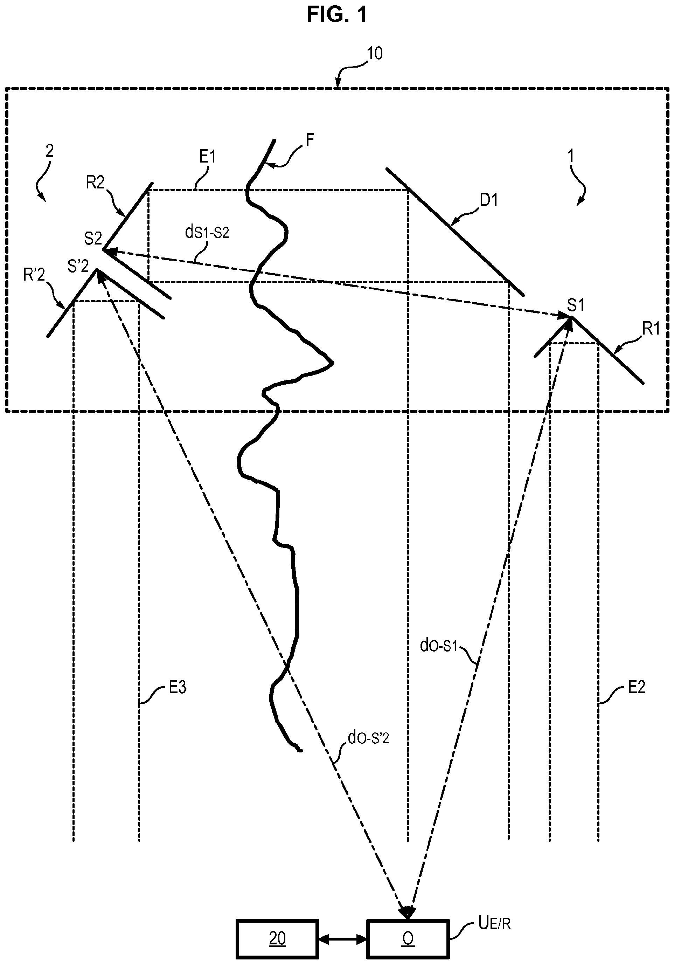

Sur la **figure 1** on a illustré une surveillance d'un site selon l'invention. En particulier, le site comprend une faille F que l'on souhaite surveiller au moyen d'un système de surveillance comprenant un ensemble réfléchissant 10 et une unité U_{E/R} d'émission/réception d'ondes électromagnétiques. Afin de surveiller la faille F (et notamment la largeur de la faille F), on dispose l'ensemble réfléchissant 10 sur le site instable.

L'ensemble réfléchissant comprend une première unité 1 disposée d'un côté de la faille F et une seconde unité 2 disposée de l'autre côté de la faille F.

Le site est observé à partir d'un point d'observation O sur lequel est disposée l'unité U_{E/R} d'émission/réception d'ondes électromagnétiques configurée pour émettre, à partir d'un point d'observation O du site, une onde électromagnétique dirigée vers l'ensemble réfléchissant. On précise que le point d'observation O peut être différent du point à partir duquel on émet l'onde électromagnétique.

L'unité U_{E/R} d'émission/réception est de préférence un radar monostatique. En particulier, il est à émission large bande avec une fréquence d'émission de l'ordre de 22 GHz et d'une largeur de bande de l'ordre de 8GHz. Il comporte une ou plusieurs antennes d'émission et de réception à réflecteur parabolique. Chaque antenne a un gain d'environ 38dB et un angle d'ouverture à 3dB de l'ordre de 1,7°. Le champ éclairé par le radar à 1 km a un diamètre d'environ 30 m. Une lunette de visée facilite le pointage du radar vers le site à surveiller.

La première unité 1 comprend un réflecteur triédrique R1 comprenant un sommet S1 et un déflecteur diédrique D1.

La seconde unité 2 comprend un premier réflecteur triédrique R2 comprenant un sommet S2.

Les sommets du réflecteur R1 triédrique de la première unité 1 et du premier réflecteur R2 triédrique de la seconde unité 2 sont des points de référence, ils sont parfaitement localisés lorsque les première 1 et seconde 2 unités sont disposées sur le site à surveiller. Ainsi, les sommets du réflecteur R1 triédrique de la première unité 1 et du premier réflecteur R2 triédrique de la seconde unité 2 sont positionnés de part et d'autre de la faille F.

De part et d'autre de la faille F, la première 1 unité et la seconde unité 2 sont configurées pour que le réflecteur triédrique R1 réfléchisse directement vers le point d'observation O une onde électromagnétique qu'il reçoit et pour que le déflecteur diédrique D1 de la première unité 1 défléchisse vers ce point d'observation O une onde qu'il reçoit du premier réflecteur R2 de la seconde unité 2 après l'avoir défléchie vers le premier réflecteur R2.

Ainsi, une onde électromagnétique issue de l'unité U_{E/R} d'émission/réception dirigée vers l'ensemble réfléchissant 10 permet d'obtenir, en retour, des ondes électromagnétiques ayant parcouru les chemins optiques suivants.

Un premier chemin optique E1 est tel que l'onde issue de l'unité U_{E/R} d'émission/réception est défléchie par le déflecteur diédrique D1 vers le premier réflecteur R2 de la seconde unité 2, lequel réfléchi le faisceau vers le déflecteur diédrique D1 afin qu'il le défléchisse à son tour vers l'unité U_{E/R} d'émission/réception.

Un second chemin optique E2 est tel que l'onde issue de l'unité U_{E/R} d'émission/réception est réfléchie par le réflecteur triédrique R1 vers l'unité U_{E/R} d'émission/réception.

Compte tenu que les positions du déflecteur diédrique D1 et du réflecteur triédrique R1 sont connus, les premier et second chemins optiques E1, E2, permettent d'obtenir la distance d_{S1-S2} entre le sommet S1 du réflecteur R1 de la première unité 1 et le sommet S2 du premier réflecteur R2 de la seconde unité 2.

Dans le cas où les première unité 1 et seconde unité 2 sont placées de sorte à ce que la distance d_{S1S2} entre le sommet S1 du réflecteur R1 de la première unité 1 et le sommet S2 du premier réflecteur R2 de la seconde unité 2 est localement perpendiculaire à la faille F, et où la déformation du site est un mouvement d'écartement des parois de la faille, alors une mesure d'une variation de la distance d_{S1-S2} entre le sommet S1 du réflecteur R1 de la première unité 1 et le sommet S2 du premier réflecteur R2 de la seconde unité 2 fournit une mesure directe d'une variation de la largeur de la faille F.

Dans les autres cas, pour estimer une variation de la largeur de la faille F, il est nécessaire d'estimer d'une part la composante radiale de cette variation, c'est-à-dire la composante selon la direction d'observation du sommet S1 du réflecteur triédrique de la première unité (direction prise entre le point d'observation O et le sommet S1 du réflecteur triédrique de la première unité 1) et d'autre part sa composante transversale, c'est-à-dire selon une direction perpendiculaire à cette direction d'observation.

De manière complémentaire, l'ensemble réfléchissant 10 est tel que la seconde unité 2 comprend, outre le premier réflecteur triédrique R2, un second réflecteur triédrique R2' comprenant un sommet S2'.

Ainsi, une onde électromagnétique issue de l'unité U_{E/R} d'émission/réception dirigée vers l'ensemble réfléchissant 10 permet d'obtenir, en retour, des ondes électromagnétiques ayant parcouru, outre les premier E1 et second E2 chemins optiques, un troisième chemin optique E3 tel que l'onde issue de l'unité U_{E/R} d'émission/réception est réfléchie par le second réflecteur R2' de la seconde unité 2 vers l'unité U_{E/R} d'émission/réception. La longueur de ce troisième chemin optique E3 permet d'obtenir la distance entre le point d'observation O et le sommet S2' du second réflecteur R2' de la seconde unité 2.

Grâce au second réflecteur triédrique R2' de la seconde unité 2, il est possible de décomposer une variation de la distance d_{S1-S2} entre le sommet S1 du réflecteur triédrique R1 de la première unité 1 et le sommet S2 du premier réflecteur R2 de la seconde unité 2 d'une part, en une variation radiale de cette distance d_{S1-S2}, cette variation radiale étant calculée à partir de la différence entre les distances mesurées entre le point d'observation O et le sommet S1 du réflecteur triédrique R1 de la première unité 1 d_{O-S1} et entre le point d'observation O et le sommet S2 du second réflecteur R2' de la seconde unité 2 d_{O-S2'}, et d'autre part, en une variation transverse de la distance d_{S1-S2} entre le sommet S1 du réflecteur R1 de la première unité 1 et le sommet S2 du premier réflecteur R2 de la seconde unité 2, cette variation transverse étant calculée à partir de la variation de la distance d_{S1-S2} entre le sommet S1 du réflecteur R1 de la première unité 1 et le sommet S2' du second réflecteur R2' de la seconde unité 2 et de la variation radiale de cette distance. Connaissant l'orientation de la distance entre le sommet S1 du réflecteur R1 de la première unité 1 et du sommet S2 du premier réflecteur R2 de la seconde unité 2 par rapport à celle de la faille, l'ajout de ce second réflecteur triédrique permet donc de distinguer un écartement des parois de la faille d'un glissement relatif de ces parois.

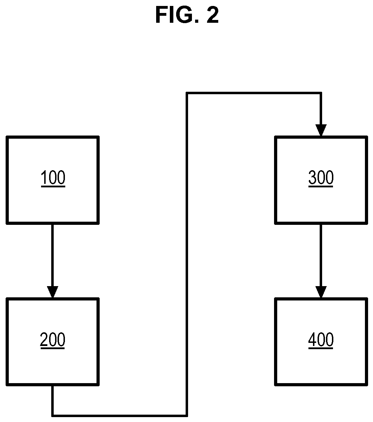

Outre l'ensemble réfléchissant 10, le système de surveillance comprend une unité de traitement 20 configurée pour mettre en oeuvre un procédé de surveillance d'un site instable décrit ci-dessous en relation avec la **figure 2****.**

Dans une première étape 100 on émet, depuis le point d'observation O une onde électromagnétique vers l'ensemble réfléchissant 1 à partir de l'unité U_{E/R} d'émission réception.

Dans une seconde étape 200 on acquiert les ondes électromagnétiques réfléchies par les première et seconde unités au moyen de l'unité U_{E/R} d'émission/réception.

Dans une troisième étape 300 on traitre les ondes acquises pour en déduire les longueurs des premier et second chemins optiques E1 et E2.

Puis, dans une quatrième étape 400, on détermine la distance d_{S1-S2} entre le sommet S1 du réflecteur R1 de la première unité 1 et le sommet S2 du premier réflecteur R2 de la seconde unité 2, cette distance d_{S1-S2} étant caractéristique du site à surveiller, à partir d'une part de la soustraction à la longueur du premier chemin optique E1 par la longueur du second chemin optique E2 et d'autre part, de la connaissance de l'orientation par rapport à la direction d'observation du sommet S1 du réflecteur R1 de la première unité 1 et de la longueur du segment de droite entre le sommet S1 du réflecteur R1 de la première unité 1 et le déflecteur D1 de la première unité 1.

En outre, si la seconde unité 2 comprend un second R2' réflecteur triédrique comprenant un sommet S2', au cours de cette quatrième étape 4, on peut estimer la distance d_{O-S2'}, entre le point d'observation O et le sommet S2' du second réflecteur R2' de la seconde unité 2.

Avantageusement, les distances ci-dessus obtenues sont déterminées à plusieurs instants, l'acquisition des ondes électromagnétiques se faisant à plusieurs instants, afin d'estimer les variations dans le temps des distance(s) d_{O-S1}, d_{S1-S2}, d_{O-S2'}, d_{O-S2}, pour en déduire un éventuel mouvement du site surveillé.

Dans le cas où l'unité U_{E/R} d'émission/réception d'ondes électromagnétiques est un radar monostatique, pour en déduire les différents chemins optiques on classe dans leur ordre d'arrivée les échos radars reçus et connaissant les positions des différents éléments de l'ensemble réfléchissant on est capable de distinguer les différents chemins optiques entre eux.

En particulier, le premier chemin optique E1, plus long que les second E2 et troisième E3 chemin optiques, correspond à un écho radar qui arrivera après les autres.

On décrit ci-dessous la détermination, dans le cas où l'unité U_{E/R} d'émission/réception est un radar monostatique, de la distance entre le point d'observation O et le sommet S1 du réflecteur de la première unité 1, ou bien entre le point d'observation O et le sommet S2' du second réflecteur R2' de la seconde unité 2.
1) La distance du réflecteur est repérée grossièrement en analysant le signal reçu en fonction du retard par rapport à l'émission. La précision est alors d'une longueur équivalente à la durée des impulsions émises (de l'ordre quelques mètres pour des impulsions d'une durée de l'ordre de quelques dizaines de nanosecondes).
2) On met en oeuvre un traitement de réponse impulsionnelle synthétisée sur l'ensemble des fréquences de la bande d'émission, qui permet par exemple d'obtenir une résolution en distance (radiale ou transversale) de l'ordre de 18 mm pour une largeur de bande de 8 GHz.
3) On met en oeuvre un traitement d'hyperrésolution, qui permet de positionner l'écho avec une précision accrue qui dépend du rapport énergétique des signaux rétrodiffusés, par les réflecteurs, avec le bruit local, les réflecteurs étant dimensionnés pour que ce rapport soit suffisamment grand. Ce traitement d'hyperrésolution met par exemple en oeuvre des algorithmes de type PRONY ou de BURG, classiquement connus de l'Homme du Métier, qui exploitent le déphasage entre les parties inférieures et supérieures du spectre total utilisé pour la synthèse de la réponse impulsionnelle. Dans le cas d'un radar monostatique, ce traitement permet une précision d'estimation de distance de 1 à 2 mm.
4) On analyse ensuite la phase du signal rétrodiffusé, qui varie de 360° pour une variation de distance d'une demi-longueur d'onde (6 mm). Ce dernier traitement permet d'affiner encore la mesure (avec cependant une limite liée au rapport signal/bruit) pour finalement atteindre une précision d'estimation de distance de 0,05 mm.

## Revendications

1. Ensemble réfléchissant (10) destiné à être disposé sur un site surveillé, ledit site étant surveillé à partir d'un point d'observation (O) à partir duquel une onde électromagnétique est dirigée vers ledit ensemble réfléchissant (10) ; l'ensemble réfléchissant (10) comprenant :
une première unité (1) comprenant un réflecteur triédrique (R1) et un déflecteur diédrique (D1), ledit réflecteur triédrique (R1) comprenant un sommet (S1);
une seconde unité (2) comprenant un premier réflecteur triédrique (R2) comprenant un sommet (S2), **caractérisé par**,
les première (1) et seconde (2) unités étant disposées l'une par rapport à l'autre pour que le réflecteur triédrique (R1) de la première unité (1) réfléchisse vers le point d'observation (O) une onde électromagnétique reçue dudit point d'observation (O) et pour que le déflecteur diédrique (D1) défléchisse vers ledit point d'observation (O) une onde électromagnétique issue dudit point d'observation (O) et reçue du premier réflecteur triédrique (R2) de la seconde unité (2) après avoir été défléchie vers ledit premier réflecteur (R2) triédrique de la seconde unité (2) par ledit déflecteur diédrique (D1).

2. Ensemble réfléchissant selon la revendication 1, dans lequel la seconde unité (2) comprend un second (R2') réflecteur triédrique comprenant un sommet (S2'); la seconde unité (2) étant adaptée pour que le second réflecteur triédrique (R2') réfléchisse une onde électromagnétique incidente reçue d'un point d'observation, directement selon sa direction d'incidence.

3. Procédé de surveillance d'un site au moyen d'un ensemble réfléchissant (10) selon l'une des revendications précédentes, le procédé comprenant les étapes suivantes :
- émission au moyen d'une unité (U_{E/R}) d'émission/réception d'ondes électromagnétiques disposée en un point d'observation (O) à partir duquel le site est surveillé, d'une une onde électromagnétique vers l'ensemble réfléchissant (10);
- acquisition, par l'unité (U_{E/R}) d'émission/réception, des ondes électromagnétiques réfléchies par les première et seconde unités ;
- traitement desdites ondes acquises pour en en déduire des longueurs d'un premier chemin optique (E1) et d'un second chemin optique (E2) ;
- détermination à partir des longueurs des chemins optiques (E1, E2) ainsi obtenus d'une distance (d_{S1-S2}) entre le sommet (S1) du réflecteur (R1) de la première unité (1) et le sommet (S2) du premier réflecteur (R2) de la seconde unité (2), ladite distance étant caractéristique du site à surveiller.

4. Procédé selon la revendication précédente, dans lequel on détermine à partir des longueurs des chemins optiques (E1, E2) une distance (d_{O-S1}) entre un point d'observation (O) et le sommet (S1) du réflecteur (R1) de la première unité (1).

5. Procédé selon l'une des revendications précédentes, dans lequel, la seconde unité (2) comprenant un second (R2') réflecteur triédrique comprenant un sommet (S2'), on traite les ondes acquises pour en déduire la longueur d'un troisième chemin optique (E3) pour déterminer une distance (d_{O-S2'}) entre un point d'observation et le sommet (S2') du second réflecteur (R2') de la seconde unité (2).

6. Procédé selon l'une des revendications précédentes, dans lequel on acquiert à plusieurs instants, par l'unité (U_{E/R}) d'émission/réception, les ondes électromagnétiques réfléchies par les première et seconde unités, afin d'estimer une variation d'au moins une des distances (d_{O-S1}, d_{S1-S2}, d_{O-S2'}, d_{O-S2}) estimées en et d'en déduire un éventuel mouvement du site surveillé.

7. Procédé selon l'une des revendications précédentes, dans lequel l'unité (U_{E/R}) d'émission/réception d'ondes électromagnétiques est un radar monostatique et dans lequel pour en déduire au moins une longueur d'un premier chemin optique (E1) et une longueur d'un second chemin optique (E2), on classe dans leur ordre d'arrivée les échos radars reçus correspondant aux dimensions du site surveillé, dans une direction d'observation du site surveillé et dans une bande de fréquence d'observation du site surveillé.

8. Système de surveillance d'un site comprenant un ensemble réfléchissant (10) selon l'une des revendications 1 ou 2 ; une unité (U_{E/R}) d'émission/réception d'ondes électromagnétiques ; et une unité (20) de traitement configurée pour mettre en oeuvre un procédé selon l'une des revendications 3 à 7.

9. Produit programme d'ordinateur comprenant des instructions de code pour la mise en oeuvre d'un procédé selon l'une des revendications 3 à 7 lorsque celui-ci est exécuté par un processeur.

## Patentansprüche

1. Reflektierende Anordnung (10), die dazu vorgesehen ist, über einem überwachten Gebiet angeordnet zu werden, wobei das Gebiet von einem Beobachtungspunkt (0) ausgehend überwacht wird, von dem ausgehend eine elektromagnetische Welle zu der reflektierenden Anordnung (10) hin gelenkt wird; wobei die reflektierende Anordnung (10) umfasst:
eine erste Einheit (1), die einen dreiflächigen Reflektor (R1) und einen zweiflächigen Deflektor (D1) umfasst, wobei der dreiflächige Reflektor (R1) eine Spitze (S1) umfasst;
eine zweite Einheit (2), die einen ersten dreiflächigen Reflektor (R2) umfasst, der eine Spitze (S2) umfasst, **dadurch gekennzeichnet, dass**
die erste (1) und zweite (2) Einheit so zueinander angeordnet sind, dass der dreiflächige Reflektor (R1) der ersten Einheit (1) eine elektromagnetische Welle, die von dem Beobachtungspunkt (0) empfangen wird, zu dem Beobachtungspunkt (0) hin reflektiert, und dass der zweiflächige Deflektor (D1) eine elektromagnetische Welle, die von dem Beobachtungspunkt (0) herstammt und von dem ersten dreiflächigen Reflektor (R2) der zweiten Einheit (2) empfangen wird, zu dem Beobachtungspunkt (0) hin ablenkt, nachdem sie durch den zweiflächigen Deflektor (D1) zu dem ersten dreiflächigen Reflektor (R2) der zweiten Einheit (2) hin abgelenkt wurde.

2. Reflektierende Anordnung gemäß Anspruch 1, wobei die zweite Einheit (2) einen zweiten dreiflächigen Reflektor (R2') umfasst, der eine Spitze (S2') umfasst; wobei die zweite Einheit (2) so ausgebildet ist, dass der zweite dreiflächige Reflektor (R2') eine einfallende elektromagnetische Welle, die von einem Beobachtungspunkt empfangen wird, direkt gemäß ihrer Einfallsrichtung reflektiert.

3. Verfahren zur Überwachung eines Gebietes mittels einer reflektierenden Anordnung (10) gemäß einem der vorhergehenden Ansprüche, wobei das Verfahren die folgenden Schritte umfasst:
- Senden von einer einer elektromagnetischen Welle mittels einer Sende-/Empfangseinheit (U_{E/R}) von elektromagnetischen Wellen, die an einem Beobachtungspunkt (0) angeordnet ist, von dem ausgehend das Gebiet überwacht wird, zu der reflektierenden Einheit (10) hin;
- Erfassen, durch die Sende-/Empfangseinheit (U_{E/R}), der elektromagnetischen Wellen, die von der ersten und zweiten Einheit reflektiert werden;
- Bearbeiten der erfassten Wellen, um daraus daraus die Längen eines ersten optischen Pfades (E1) und eines zweiten optischen Pfades (E2) abzuleiten;
- Bestimmen, ausgehend von den so erhaltenen Längen der optischen Pfade (E1, E2), einer Distanz (d_{S1-S2}) zwischen der Spitze (S1) des Reflektors (R1) der ersten Einheit (1) und der Spitze (S2) des ersten Reflektors (R2) der zweiten Einheit (2), wobei die Distanz für das zu überwachende Gebiet kennzeichnend ist.

4. Verfahren gemäß dem vorhergehenden Anspruch, wobei ausgehend von den Längen der optischen Pfade (E1, E2) eine Distanz (d_{O-S1}) zwischen einem Beobachtungspunkt (0) und der Spitze (S1) des Reflektors (R1) der ersten Einheit (1) bestimmt wird.

5. Verfahren gemäß einem der vorhergehenden Ansprüche, wobei, wenn die zweite Einheit (2) einen zweiten dreiflächigen Reflektor (R2') umfasst, der eine Spitze (S2') umfasst, die erfassten Wellen bearbeitet werden, um daraus die Länge eines dritten optischen Pfades (E3) abzuleiten, um eine Distanz (d_{O-S2'}) zwischen einem Beobachtungspunkt und der Spitze (S2') des zweiten Reflektors (R2') der zweiten Einheit (2) zu bestimmen.

6. Verfahren gemäß einem der vorhergehenden Ansprüche, wobei die von der ersten und zweiten Einheit reflektierten elektromagnetischen Wellen zu mehreren Zeitpunkte von der Sende-/Empfangseinheit (U_{E/R}) erfasst werden, um eine Veränderung von mindestens einer der geschätzten Distanzen (d_{O-S1}, d_{S1-S2}, d_{O-S2'}, d_{O-S2}) daraus zu schätzen und eine eventuelle Bewegung des überwachten Gebietes daraus abzuleiten.

7. Verfahren gemäß einem der vorhergehenden Ansprüche, wobei die Sende-/Empfangseinheit (U_{E/R}) von elektromagnetischen Wellen ein monostatisches Radar ist und wobei, um daraus mindestens eine Länge eines ersten optischen Pfades (E1) und eine Länge eines zweiten optischen Pfades (E2) abzuleiten, die den Abmessungen des überwachten Gebietes entsprechenden Radarechos, die in einer Beobachtungsrichtung des überwachten Gebietes und in einem Beobachtungsfrequenzband des überwachten Gebietes empfangen werden, in ihrer Eingangsreihenfolge einordnet.

8. System zur Überwachung eines Gebietes, umfassend eine reflektierende Anordnung (10) gemäß einem der Ansprüche 1 oder 2; eine Sende-/Empfangseinheit (U_{E/R}) von elektromagnetischen Wellen; und eine Bearbeitungseinheit (20), die dafür eingerichtet ist, ein Verfahren gemäß einem der Ansprüche 3 bis 7 umzusetzen.

9. Computerprogrammprodukt, umfassend Codeanweisungen zur Umsetzung eines Verfahrens gemäß einem der Ansprüche 3 bis 7, wenn dasselbe von einem Prozessor ausgeführt wird.

## Claims

1. Reflecting assembly (10) designed to be arranged on a monitored site, said site being monitored from an observation point (O) from which an electromagnetic wave is directed towards said reflecting assembly (10); the reflecting assembly (10) comprising:
a first unit (1) comprising a trihedral reflector (R1) and a dihedral deflector (D1), said trihedral reflector (R1) comprising an apex (S1);
a second unit (2) comprising a first trihedral reflector (R2) comprising an apex (S2), **characterised by**
the first (1) and second (2) units being arranged relative to each other so that the trihedral reflector (R1) of the first unit (1) reflects towards the observation point (O) an electromagnetic wave received from said observation point (O) and so that the dihedral deflector (D1) deflects towards said observation point (O) an electromagnetic wave originating from said observation point (O) and received from the first trihedral reflector (R2) of the second unit (2) after having been deflected towards said first trihedral reflector (R2) of the second unit (2) by said dihedral deflector (D1).

2. Reflecting assembly according to claim 1, wherein the second unit (2) comprises a second trihedral reflector (R2') comprises an apex (S2'); the second unit (2) being adapted so that the second trihedral reflector (R2') reflects an incident electromagnetic wave received from an observation point, directly according to its direction of incidence.

3. Method for monitoring a site by means of a reflecting assembly (10) according to one of the preceding claims, the method comprising the following steps:
- transmission by means of a unit (U_{E/R}) for transmitting/receiving electromagnetic waves arranged at an observation point (O) from which the site is monitored, of an an electromagnetic wave towards the reflecting assembly (10);
- acquisition, by the transmit/receive unit (U_{E/R}), of electromagnetic waves reflected by the first and second units;
- processing of said waves acquired to deduce therefrom therefrom lengths of a first optical path (E1) and a second optical path (E2);
- determination, from the lengths of the optical paths (E1, E2) thus obtained, of the distance (d_{S1-S2}) between the apex (S1) of the reflector (R1) of the first unit (1) and the apex (S2) of the first reflector (R2) of the second unit (2), said distance being characteristic of the site to be monitored.

4. Method according to the preceding claim, wherein a distance (d_{O-S1}) between an observation point (O) and the apex (S1) of the reflector (R1) of the first unit (1) is determined from the lengths of the optical paths (E1, E2).

5. Method according to one of the preceding claims, wherein, the second unit (2) comprising a second trihedral reflector (R2') comprising an apex (S2'), the acquired waves are processed to deduce therefrom the length of a third optical path (E3) to determine a distance (d_{O-S2'}) between an observation point and the apex (S2') of the second reflector (R2') of the second unit (2).

6. Method according to one of the preceding claims, wherein the electromagnetic waves reflected by the first and second units are acquired at several instants by the transmit/receive unit (U_{E/R}) so as to estimate a variation of at least one of the estimated distances (d_{O-S1}, d_{S1-S2}, d_{O-S2'}, d_{O-S2}) and to deduce therefrom any movement of the monitored site.

7. Method according to one of the preceding claims, wherein the unit U_{E/R}) for transmitting/receiving electromagnetic waves is a monostatic radar and wherein, to deduce therefrom at least one length of a first optical path (E1) and a length of a second optical path (E2), the received radar echoes corresponding to the dimensions of the monitored site are sorted in their order of arrival, in a direction of observation of the monitored site and in an observation frequency band of the monitored site.

8. System for monitoring a site comprising a reflecting assembly (10) according to one of claims 1 or 2; a unit (U_{E/R}) for transmitting/receiving electromagnetic waves; and a processing unit (20) configured to execute a method according to one of claims 3 to 7.

9. Computer program product comprising code instructions for executing a method according to one of Claims 3 to 7 when the latter is executed by a processor.
